# EUROPEAN PATENT SPECIFICATION

(11) **EP 0 416 838 B1**
(45) Date of publication and mention of the grant of the patent: **01.03.1995**
(21) Application number: 90309603.0
(22) Date of filing: 03.09.1990
(51) Int. Cl.: A01G 9/10

(54) **Propagation block**
Vermehrungsblock
Bloc de propagation

(30) Priority: 05.09.1989 GB 8920034
(43) Date of publication of application: 13.03.1991
(73) Proprietor: Rockwool/ Grodan B.V., NL-6074 NH Melick-Herkenbosch (NL)
(72) Inventor: Cockram, David Ralph, Wigan, Lancashire WN8 7DL (GB)
(74) Representative: Prins, Hendrik Willem

(56) References cited:
- EP-A- 0 176 134
- EP-A- 0 414 330
- CH-A- 661 406
- DE-A- 2 915 644
- GB-A- 1 426 313

## Description

This invention relates to a propagation block for use in substrate culture, comprising a parallelepiped of mineral wool fibres held together with a binder and incorporating a surfactant, the upper surface being provided with an opening of definite depth for receiving a seed or seedling which then grows its roots into the block or for receiving a small mineral wool cube containing such a seedling, the sides of the block being covered with a layer of shrink wrap plastic and a part of the base of the block being cut away to provide an air space to facilitate air pruning of the roots.

EP-A 0 414 330, prior art pursuant Article 54 (3) and (4) EPC, discloses a plant pot for substrate culture provided with one or more internal cavities closed off towards the upper surface. Each cavity is an air-chamber into which air may enter through the substrate material which is of high porosity. Accordingly oxygen extracted by the plant roots is directly supplemented from the outside. Since these cavities extend over a major part of the height of the plant pot, that is, beyond the water level line during use, air enters these cavities via the porous plant product only via the gas phase and not via a water phase.

It is noted that EP-A 0 176 134 discloses a propagation block according to the preamble of claim 1, whereby part of the block base is cut away for a minor part of the height of the block forming base grooves. These grooves debouch in the side services thereby providing air space to facilitate air pruning of the plant roots.

It is an object of the present invention to provide a propagation block according to the preamble of claim 1, which has the advantage that roots can be air-pruned without subsequent undue loss of moisture or access for pests. This is obtained with the propagation block according to the invention chacterised in that the air space is enclosed by the periphery of the base.

Use of a cylindrical recess in the base of the block provides an air space shape that can easily be cut out by known techniques and use of a single air space allows the cutting machinery to be as simple as possible.

The adoption of a process in which the cylinder in the base is drilled at the same time as the opening in the upper surface is formed provides the advantage that no extra process steps are needed to form the cylinder in the base.

The invention will now be further described by way of example only and with reference to the accompanying drawings of which:
figure 1 shows a grooved block according to the prior art;
figure 2 shows a block according to the invention having one cylindrical recess;
figure 3 shows a block according to the invention having nine cylindrical recesses;

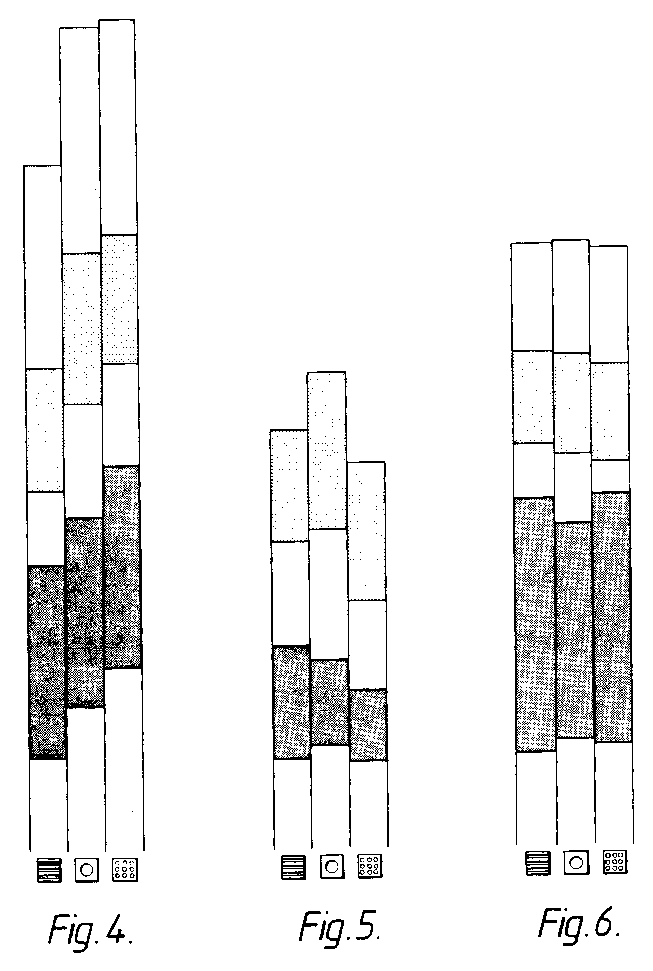

figure 4 shows the average height of cucumber plants grown in different types of block;
figure 5 shows the average heights of sweet pepper plants grown in different types of block; and
figure 6 shows the average heights of tomato plants grown in different types of block.

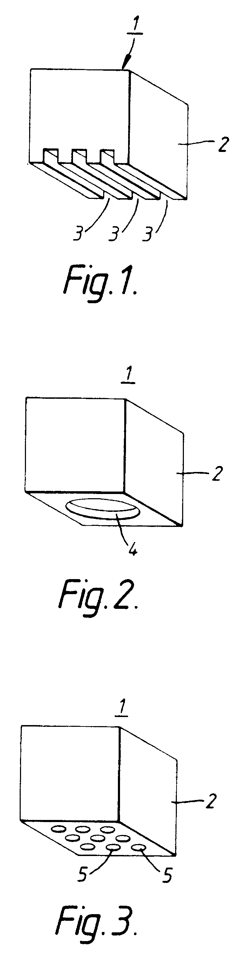

Figure 1 shows a known block 1 cut from a slab of mineral wool fibres bound together with a heat cured phenolic compound and containing a surfactant to render it wettable. The block has sides of approximately equal dimensions and its volume is approximately 1 litre. The flbres in the block are predominantly oriented vertically so that plant roots will tend to grow down into the block rather than towards its sides. To ensure that roots do not grow out of the sides they are encased in a layer of shrink wrap polyethylene 2. The polyethylene may have small holes to permit some aeration. The top surface of the block 1 may have a cylindrical recess (not shown) into which a seed or seedling may be planted for propagation. It is a common practice to plant seeds in smaller cubes which are then inserted into the top recess once a seedling is established. Alternatively, the recess can be filled with peat or soil and a seed planted in it. On the base of the cube three transverse grooves 3 have been cut. The cutting operation also removes part of the polyethylene 2 which results in the grooves communicating directly with the air outside the block. Hitherto this had been thought to be necessary to obtain the enhanced root development and plant growth due to air pruning of roots growing into the grooves 3.

Surprisingly, when we conducted comparative studies between blocks having such transverse grooves and blocks having a recess in the base which did not communicate directly with the external air it was found that it could be disadvantageous to have such direct communication. Figures 2 and 3 show two of the base configurations we used for our experiments. Figure 2 shows a cube having a single central recess 4 which is circular and has a depth of about 1 cm. This depth corresponds to the depth of the grooves in the prior art. The diameter of the circle is chosen to give a total recessed area of 30% which corresponds to the area of the recess attributable to the grooves of the prior art. The cube shown in figure 3 has 9 recesses 5 each 1 cm deep and arranged on a grid symmetrical about the centre of the base. The recesses are of equal diameter and have a total area equivalent to the area of the single recess of figure 2 and the prior art grooved block of figure 1.

It is usual for plant growers and block suppliers to use one type of block for a range of plants. To determine whether or not an enclosed air space gave better overall performance than the known grooved block we conducted growing trials using cucumbers, sweet peppers and tomatoes. The varieties used were Corona, Delphin and Counter respectively.

The trials were conducted concurrently, in spring and under normal propagation conditions. No supplementary lighting was used and bottom heat was regulated at 22 to 26 C. For each crop the blocks were randomly distributed to ensure that the results were not unduly influenced by the immediate environment. Once roots had emerged from the base of the block some of the blocks were moved onto a rock wool slab to allow the plant roots to grow into the slab and the plant to become well established. The plants in blocks that were not moved onto slabs for establishment were dried and weighed to give an indication of the total quantity of vegetative matter that had been produced. These dry weights were then averaged. At the end of the establishment period the plants growing on slabs also had their dry weights determined and averaged. The results for each crop are given in tables 1, 2 and 3.

**TABLE 1**

| Cucumbers | | | |
|---|---|---|---|
| Dry weight (g) | Grooved | 1 recess | 9 recesses |
| before establishment | 14.07 | 16.97 | 16.91 |
| after establishment | 32.95 | 37.21 | 38.51 |

**TABLE 2**

| Sweet Peppers | | | |
|---|---|---|---|
| Dry weight (g) | Grooved | 1 recess | 9 recesses |
| before establishment | 3.15 | 3.25 | 3.43 |
| after establishment | 25.59 | 24.60 | 22.07 |

**TABLE 3**

| Tomatoes | | | |
|---|---|---|---|
| Dry weight (g) | Grooved | 1 recess | 9 recesses |
| before establishment | 4.0 | 4.8 | 4.7 |
| after establishment | 42.72 | 43.26 | 42.97 |

## Claims

1. A propagation block (1) for use in a substrate culture comprising a parallelepiped of mineral wool fibres held together with a binder an incorporating a surfactant, the upper surface being provided with an opening of definite depth for receiving a seed or seedling which then grows its roots into the block, sides of the block (2) being covered with a layer of shrink wrap plastic and at least a part of the base of the block being cut away for a minor part of the height of the block (1) to provide an air space (4) to facilitate air pruning of the roots, characterised in that the air space (4) is enclosed by the periphery of the base.

2. A propagation block as claimed in claim 1 in which the air space is cylindrical.

3. A propagation block as claimed in claim 1 or 2 in which the air space is provided by a single recess in the base of the block.

4. A method of manufacturing a propagation block as claimed in claim 2 or 3 in which the air space is formed at the same time as the opening in the upper surface is formed.

## Patentansprüche

1. Vermehrungsblock (1) zum Benutzen in einer Substratkultur mit einem Quader aus Mineralwollefasern, die durch ein Bindemittel gehalten sind und einen grenzflächenaktiven Stoff enthalten, wobei die obere Oberfläche mit einer Öffnung einer vorbestimmten Tiefe zum Aufnehmen eines Samens oder eines Setzlinges versehen ist, dessen Wurzeln in den Block wachsen, Seiten des Blockes (2) mit einer Schicht eines Schrumpffolienkunststoffes bedeckt sind, und mindestens ein Teil der Basis des Blockes um einen kleinen Teil der Höhe des Blockes (1) weggeschnitten ist zum Vorsehen eines Luftraumes (4) zum Erleichtern des Luftzutrittes zu den Wurzeln, dadurch gekennzeichnet, daß der Luftraum (4) von dem Umfang der Basis eingeschlossen ist.

2. Vermehrungsblock nach Anspruch 1, bei dem der Luftraum zylindrisch ist.

3. Vermehrungsblock nach Anspruch 1 oder 2, bei dem der Luftraum durch eine einzelne Ausnehmung in der Basis des Blockes vorgesehen ist.

4. Verfahren zum Herstellen eines Vermehrungsblockes, wie er in Anspruch 2 oder 3 beansprucht ist, bei dem der Luftraum zur gleichen Zeit wie die Öffnung in der oberen Oberfläche gebildet wird.

## Revendications

1. Bloc de marcottage (1) destiné à l'utilisation pour la culture en substrat, et qui comprend un parallélépipède de libres de laine de roche maintenues ensemble au moyen d'un liant et contenant un agent de surface, une ouverture de profondeur déterminée étant pratiquée dans la surface supérieure du bloc pour lui permettre de recevoir une graine ou un semis qui produira ensuite des racines dans le bloc ; les côtés du bloc (2) étant recouverts d'une couche de plastique d'emballage rétractable, et au moins une partie de la base du bloc étant découpée sur une partie mineure de la hauteur du bloc (1) pour créer un espace d'air (4) destiné à faciliter l'élagage à l'air libre des racines, caractérisé en ce que l'espace d'air (4) est clos par la périphérie de la base.

2. Bloc de marcottage selon la revendication 1, dans lequel l'espace d'air est cylindrique.

3. Bloc de marcottage selon la revendication 1 ou 2, dans lequel l'espace d'air est fourni par un seul renfoncement pratiqué dans la base du bloc.

4. Procédé de fabrication du bloc de marcottage selon la revendication 2 ou 3, selon lequel l'espace d'air est formé en même temps que l'ouverture est pratiquée dans la surface supérieure.
